# EUROPÄISCHE PATENTANMELDUNG

(11) **EP 1 123 747 A2**
(43) Veröffentlichungstag der Anmeldung: **16.08.2001**
(21) Anmeldenummer: 00118630.3
(22) Anmeldetag: 28.08.2000
(51) Int. Cl.: B05B 15/12

(54) **Pulverbeschichtungsanlage**

(30) Priorität: 09.02.2000 DE 10005656
(71) Anmelder: WAGNER INTERNATIONAL AG, 9450 Altstätten (CH)
(72) Erfinder: Ziwica, Daniel, 9306 Freidorf (CH); Keller, Christoph, 9213 Hauptwil (CH); Adams, Horst, Dr., 9450 Altstätten (CH); Lutz, Bernd, 88662 Überlingen (DE)
(74) Vertreter: Liesegang, Eva

(57) **Zusammenfassung**

Eine Pulverbeschichtungsanlage mit einer Kabine (1), in der Werkstücke (3) mit Pulver beschichtet werden und die ein Austrageband (15) zum Abfördern von Überschusspulver zu einer Rückgewinnungseinheit (5) oder einer Filtereinheit (4) aufweist, zeichnet sich dadurch aus, daß sowohl eine Rückgewinnungseinheit (5) als auch eine Filtereinheit (4) vorgesehen sind, die jeweils über einen gesonderten Kanal (16;18) mit einer Absaugöffnung (17;19) in der Kabine (1) verbunden sind, und daß ein Absperrorgan (42) zum wahlweisen Absperren der Pulverförderung zur Filtereinheit (4) oder zur Rückgewinnungseinheit (5) in den gesonderten Kanälen (16;18) vorgesehen ist.

## Beschreibung

Die Erfindung betrifft eine Pulverbeschichtungsanlage mit den Merkmalen des Oberbegriffs des Anspruchs 1.

Beim Pulverbeschichten von Werkstücken wird das Werkstück durch eine Pulverbeschichtungskabine geführt und in dieser Kabine mit Pulver beschichtet. Dabei schlägt sich nicht das gesamte, durch die Applikationsgeräte in die Kabine geförderte Pulver auf dem Werkstück nieder. Ein großer Teil des Überschusspulvers lagert sich auf dem Boden der Kabine ab.

Bei bekannten Kabinen wird dieses Überschusspulver mittels eines Gebläses aus der Kabine abgesaugt. Wird jedoch nur über die Beaufschlagung der Absaugöffnung mit dem durch das Gebläse erzeugten Unterdruck versucht, das Überschusspulver aus der Kabine zu entfernen, bleibt die Saugwirkung auf einen relativ engen Bereich um die Absaugöffnung begrenzt. In den übrigen Bodenbereichen ergibt sich nach wie vor eine Anhäufung des Pulvers.

Dieser Nachteil kann durch Einsatz einer Leitvorrichtung abgeschwächt werden, wie sie in der EP 0 384 236 B1 beschrieben ist. Eine solche Leitvorrichtung reduziert die Pulverablagerung auf dem Boden der Kabine.

Ein weiteres Mittel zur Reduktion von Anhäufungen ist in der EP 0 200 681 B1 offenbart. Dabei ist der Boden der Kabine als V-förmige Rinne mit entgegengesetzt geneigten Seitenwänden ausgebildet, an deren tiefster Stelle sich eine Absaugöffnung befindet. Das überschüssige Pulver kann nun an den geneigten Seitenwänden der Rinne nach unten in die Absaugöffnung rutschen. Bei dieser Konstruktion ist der Boden der Kabine allerdings nicht begehbar, was zu Zwecken der Inspektion und Wartung wünschenswert wäre.

Bei einer weiteren bekannten Kabine (EP 0 727 258 B1) ist der Boden der Kabine von einem begehbaren Austrageband gebildet. Das auf dem Boden abgelagerte Pulver wird mit dem Austrageband durch die Kabine zu einer stirnseitigen Absaugöffnung gefördert. Hierdurch läßt sich das Pulver auch aus den Bereichen abfördern, welche nicht in der unmittelbaren Umgebung der Absaugöffnung liegen.

Bei sämtlichen oben beschriebenen Kabinen wird das Überschusspulver über eine Absaugöffnung entweder zur Pulver-Rückgewinnungsanlage oder, falls auf eine Rückgewinnung verzichtet wird, direkt zu einer Filtereinheit gefördert.

Eine Pulverbeschichtungsanlage mit den Merkmalen des Oberbegriffs des Anspruchs 1 ist aus der US-A-5 107 756 bekannt. Dabei läßt sich der Förderstrom des Überschußpulvers mittels einer an der Absaugöffnung gelegenen Umschaltklappe entweder direkt zur Filtereinheit oder zu einer Rückgewinnungseinheit umlenken. Außerdem ist ein Absperrorgan vorgesehen, das wahlweise einen Zuführkanal zur Rückgewinnungseinheit oder diesen Zuführkanal und gleichzeitig einen Rückführkanal der Rückgewinnungseinheit absperren kann. Diese Konstruktion ist aufwendig. Die Umschalt- und Absperrorgane sind an Stellen angeordnet, die zu hoher Verschmutzung im Betrieb führen. Daher ist die Reinigung bei einem Farbwechsel sehr zeitaufwendig und im Ergebnis nicht zufriedenstellend.

Es ist Aufgabe der Erfindung, eine Pulverbeschichtungsanlage der eingangs beschriebenen Art zu schaffen, bei der ein Umschalten vom Betrieb mit Filtern auf Betrieb mit Rückgewinnen von Überschußpulver und umgekehrt schnell und einfach und unter weitestgehender Vermeidung einer Verschmutzung möglich ist und bei der eine Reinigung schnell, einfach und effizient durchgeführt werden kann.

Diese Aufgabe ist durch Patentanspruch 1 gelöst. Vorteilhafte Ausgestaltungen der Erfindung sind in den Unteransprüchen angegeben.

Bei einer Pulverbeschichtungsanlage nach der Erfindung ist eine klare Trennung zwischen der Betriebsweise mit Pulver-Rückgewinnung und der Betriebsweise mit direktem Filtern des Überschusspulvers über den Filter gewährleistet. Dadurch wird Verschmutzung weitestgehend vermieden und der Reinigungsaufwand minimiert.

Die Erfindung ist im folgenden anhand schematischer Zeichnungen an vorteilhaften Ausführungsbeispielen mit weiteren Einzelheiten näher erläutert. Es zeigen:
- Fig.1: eine Draufsicht auf eine Pulverbeschichtungsanlage gemäß einer ersten Ausführung der Erfindung in einer Betriebssituation mit direktem Filtern von abgeführtem Überschusspulver;
- Fig. 2: einen schematischen Längsschnitt durch eine Kabine der Pulverbeschichtungsanlage nach Fig. 1;
- Fig. 3: einen schematischen Querschnitt durch die Kabine nach Fig. 2;
- Fig. 4: in einer Draufsicht wie Fig. 1 die Pulverbeschichtungsanlage nach Figur 1 in einer Betriebssituation mit Rückgewinnen und Nachfiltern von abgeführtem Überschusspulver;
- Fig. 5: eine teilweise geschnittene Draufsicht auf eine Pulverbeschichtungsanlage gemäß einer zweiten, besonders vorteilhaften Ausführung der Erfindung in einer ersten Betriebsstellung;
- Fig. 6: eine Draufsicht wie Fig. 5 der zweiten Ausführung in einer zweiten Betriebsstellung und
- Fig. 7: eine Draufsicht wie Fig. 5 oder 6 der zweiten Ausführung in einer dritten Betriebsstellung.

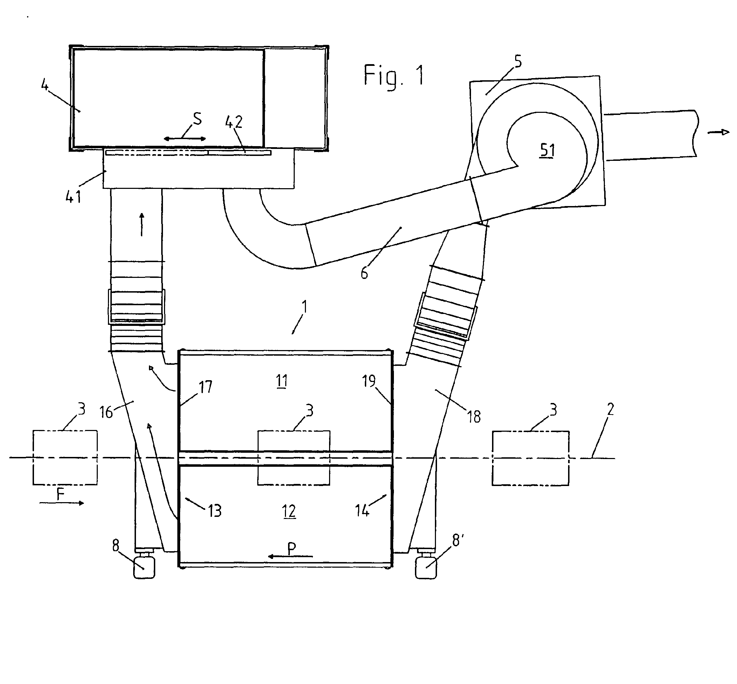

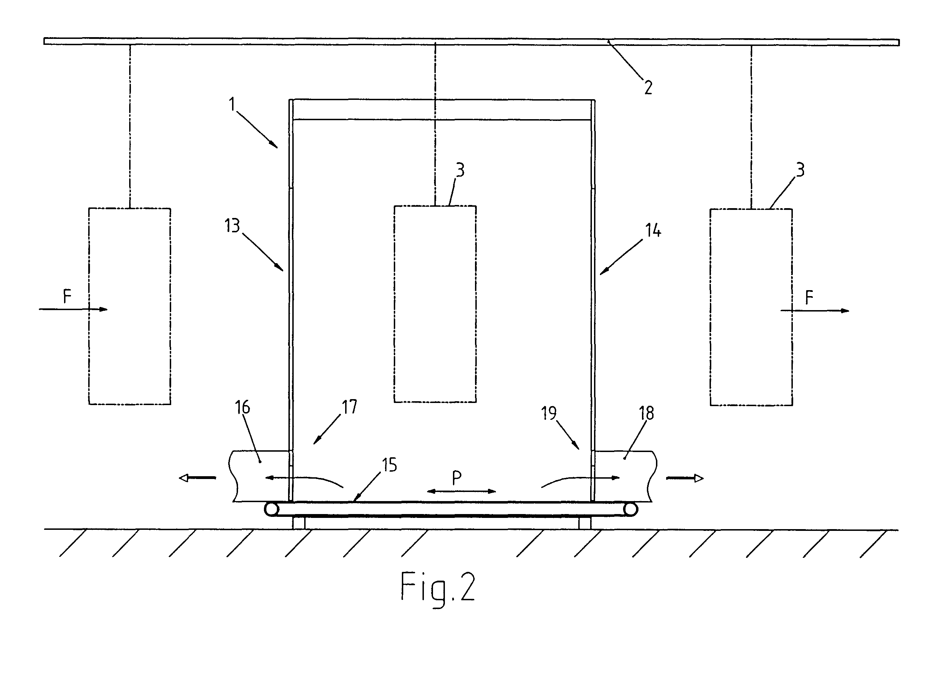

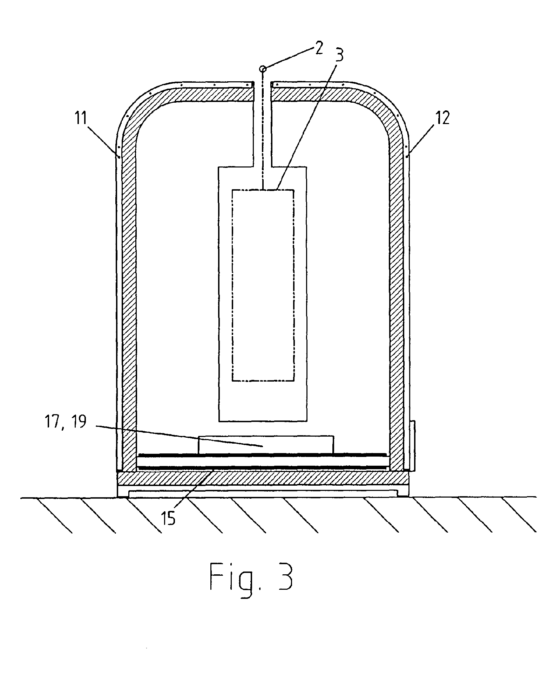

Die in den Fig. 1 bis 4 gezeigte Pulverbeschichtungsanlage hat eine Kabine 1 mit in Längsrichtung geteilten Hälften 11, 12 zum Durchlassen einer Fördervorrichtung 2 mit daran hängenden Werkstücken 3. Der Förderer 2 kann die Werkstücke 3 kontinuierlich oder schrittweise durch die Kabine 1 fördern, in der sie beschichtet werden. Die Kabine hat eine Einlaßseite 13 und eine Auslaßseite 14. Der Boden der Kabine 1 ist von einem Austrageband 15 für Überschußpulver gebildet, das in entgegengesetzte, durch den Doppelpfeil P angedeutete Richtungen antreibbar ist. In die Einlaßseite 13 mündet an einer Stelle unmittelbar oberhalb des Austragebandes 15 ein Kanal 16 mit einer Absaugöffnung 17 zur Absaugung von Überschusspulver. In der Auslaßseite mündet ebenfalls ein Kanal 18 zur Absaugung von Überschusspulver mit einer Absaug- öffnung 19 an einer Stelle unmittelbar über dem Austrageband 15.

Die Auslaßseite 14 könnte auch durch eine geschlossene Wand ersetzt sein. In diesem Fall würden die Werkstücke 3 in Richtung F in die Kabine hinein und nach dem Beschichten in Gegenrichtung wieder herausgefördert werden.

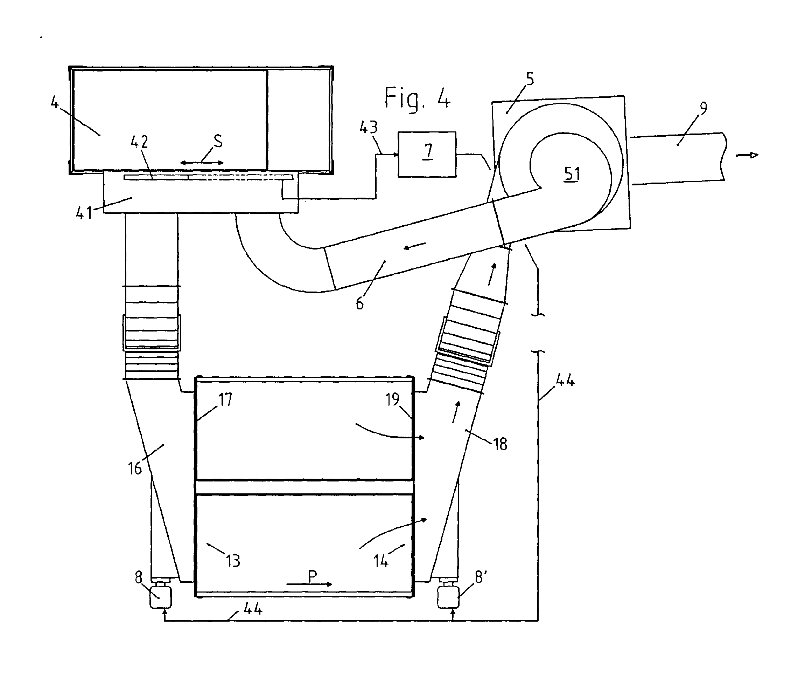

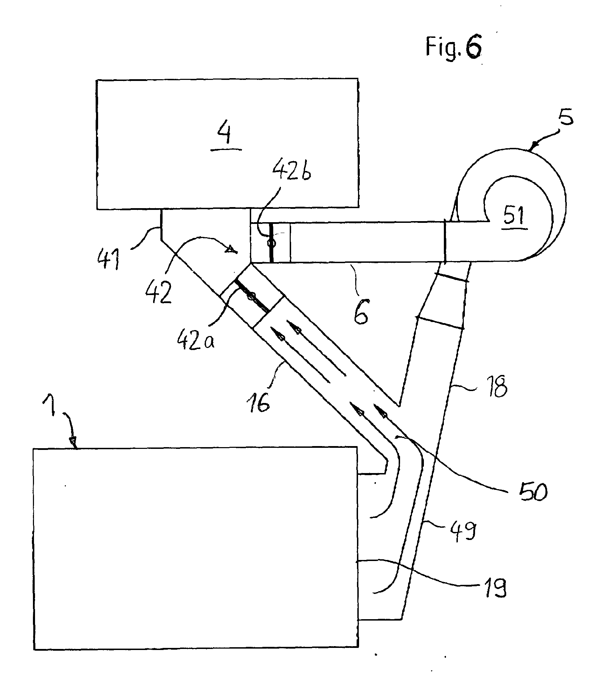

Der Kanal 16 führt direkt zu einer Filtereinheit 4 bekannter Bauart, während der Kanal 18 zu einer Rückgewinnungseinheit, hier in Gestalt eines bekannten Zyklons 5, führt. Die Filtereinheit 4 hat auf der der Kabine 1 zugewandten Seite ein Filtereinlaßgehäuse 41, in dem Einlässe für Kanäle 6, 16 nebeneinander vorgesehen sind und ein Schieber 42 untergebracht ist. Ein dritter Kanal oder Verbindungskanal 6 verbindet einen Auslaßbereich 51 des Zyklons 5 mit dem Filtereinlaßgehäuse 41, in das unmittelbar benachbart auch der Kanal 16 zur Filtereinheit 4 von der Kabine 1 mündet. Der Schieber 42 ist translatorisch zwischen zwei Stellungen in Richtung des Pfeiles S in dem Filtereinlaßgehäuse 41 zwischen zwei Absperrstellungen für die Kanäle 6, 16 hin- und herverschiebbar. In der in Fig. 1 gezeigten Stellung versperrt der Schieber 42 die Pulverförderung von der Rückgewinnungseinheit 5 durch den Verbindungskanal 6 in die Filtereinheit 4. In der in Fig. 4 gezeigten Stellung versperrt der Schieber 42 die direkte Pulverförderung aus der Kabine 1 über den Kanal 16 in die Filtereinheit 4. Dabei gibt der Schieber 42 jeweils die Förderung durch den anderen Kanal 16 in Fig. 1 bzw. 6 in Fig. 4 in die Filtereinheit 4 frei.

Die in Fig. 1 und 4 bei 8 und 8' angedeuteten Antriebe des Austragebandes 15 werden je nach der Stellung des Schiebers 42 so geschaltet, daß der Antrieb 8 das Austrageband 15 in der Stellung gemäß Fig. 1 von rechts nach links zieht, so daß ein in der Filtereinheit 4 befindliches, nicht gezeichnetes Gebläse auf dem Austrageband angehäuftes Überschusspulver über die Absaugöffnung 17 in den Kanal 16 und von dort in die Filtereinheit 4 saugt, während in der Schieberstellung gemäß Fig. 4 der Antrieb 8' das Austrageband 15 von links nach rechts zieht, so daß auf dem Austrageband 15 angehäuftes Überschusspulver über die Absaugöffnung 19 und den Kanal 18 zuerst in die Rückgewinnungseinheit 5 gesaugt wird. Ein kleiner Teil des Überschusspulvers, welcher von der Rückgewinnungseinheit nicht zurückgewonnen werden kann, wird über den Verbindungskanal 6 in die Filtereinheit 4 gesaugt. Die Filtereinheit arbeitet dabei als Nachfilter. Der größte Teil des Überschusspulvers wird jedoch nach dem Durchlaufen der Rückgewinnungseinheit mittels einer Abführleitung 9 wieder in den Pulverkreislauf eingeschleust. Prinzipiell würde auch ein einziger Antrieb für das Austrageband 15 genügen; die Anordnung mit zwei jeweils ziehenden Antrieben 8, 8'ist jedoch wegen der ständig aufrechterhaltenen Bandspannung besonders vorteilhaft.

Die Reversierung der Antriebsrichtung des Austragebandes 15 kann automatisch in Abhängigkeit von der Stellung des Schiebers 42 erfolgen.

Alternativ kann eine Reversierung der Antriebsrichtung des Austragebandes 15 zwangsläufig zu einer entsprechenden Veränderung der Stellung des Schiebers 42 führen. Hierzu ist eine in Fig. 4 angedeutete Steuereinheit 7 vorgesehen. Im vorliegenden Fall veranlaßt ein entsprechendes, über die Leitung 43 in die Steuereinheit 7 eingespeistes, die Schieberstellung repräsentierendes Signal die Steuereinheit zu einer Ausgabe eines Reversiersignals über die Signalleitung 44 an die Antriebe 8 oder 8' des Austragebandes 15.

Die Pulverbeschichtungsanlage läßt außer einer Betriebsweise mit Pulverförderung ausschließlich über den Kanal 16 oder ausschließlich über die Kanäle 18 und 6 in die Filtereinheit 4 noch eine dritte Betriebsweise zu, die insbesondere zur Reinigung gewählt wird. In dieser dritten Betriebsweise kann der Schieber in eine Stellung gerückt werden, in welcher eine Förderung gleichzeitig über die Kanäle 16 und 18 und 6 in die Filtereinheit 4 ermöglicht ist. Der Schieber 42 sperrt also keine der beiden Einlässe in die Filtereinheit ab, sondern läßt diese zumindest teilweise offen. In dieser Stellung kommunizieren also die Kanäle 16; 18 und 6 mindestens teilweise mit der Filtereinheit 4. Prinzipiell kann dabei wahlweise das Austrageband 15 nach links zur Absaugöffnung 17 hin oder nach rechts zur Absaugöffnung 19 hin angetrieben werden. Bevorzugt ist eine Bewegung des Austragebandes 15 in Richtung zur Absaugöffnung 17, d.h. in den Fig. 1, 2 und 4 in Richtung nach links, so daß in der Kabine auf das Austrageband gefallenes Pulver direkt in die Filtereinheit transportiert wird. Gleichzeitig wird jedoch über die Kanäle 18 und 6 Reinigungsluft auch durch den besonders verschmutzungsanfälligen Zyklon 5 gesaugt. Diese Betriebsweise ermöglicht somit gleichzeitig mit der Reinigung ein Beschichten von durch die Kabine geschleusten Werkstücken 3. Dies führt zu einer optimalen Ausnutzung der Pulverbeschichtungsanlage gemäß der Erfindung.

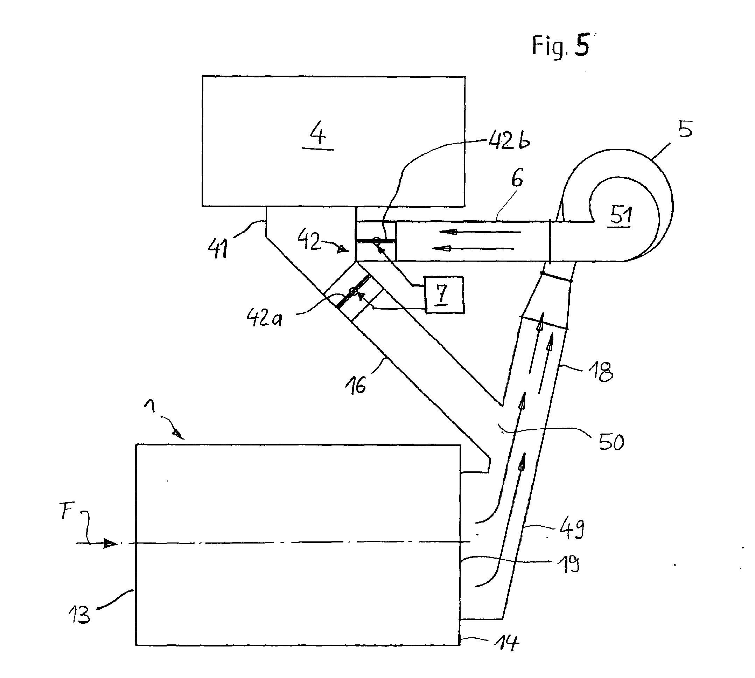

Nachfolgend wird nun die Ausführung der Erfindung gemäß den Fig. 5 bis 7 beschrieben. Gleiche Bezugszeichen bezeichnen hier gleiche oder gleichwirkende Teile oder Baugruppen wie bei der Ausführung nach den Fig. 1 bis 4. Solche gleichwirkenden Teile sind nur insoweit beschrieben, als sie Unterschiede zu der Ausführung nach den Fig. 1 bis 4 betreffen, um unnötige Wiederholungen zu vermeiden.

Ein erster wichtiger Unterschied ist, daß bei der Ausführung nach den Fig. 5 bis 7 kein Austrageband gezeichnet ist. Dies bedeutet, daß die Ausführung nach den Fig. 5 bis 7 sowohl mit einem Austrageband für Überschußpulver gemäß den Fig. 1 bis 4 als auch ohne ein solches Austrageband betrieben werden kann.

Ein weiterer wichtiger Unterschied ist, daß bei der Ausführung nach den Fig. 5 bis 7 nur eine Absaugöffnung 19 auf der in den Fig. 5 bis 7 rechten Seite der Kabine vorgesehen ist. Diese Absaugöffnung mündet in einen Kanalabschnitt 49, der sich an einer Verzweigung 50 in einen ersten Kanal 16 und einen zweiten Kanal 18 teilt.

Eine Steuereinrichtung 42 umfaßt zwei Drosselorgane, nämlich eine Drosselklappe 42a im ersten Kanal 16 und eine Drosselklappe 42b in einem dritten Kanal 6, welcher den Auslaß 51 der Rückgewinnungseinheit 5 mit einem Filtereinlaßgehäuse 41 verbindet.

Die Drosselklappen 42a und 42b sind um ihre jeweils nicht bezeichneten Drehpunkte zwischen zwei Grenzstellungen, nämlich einer Offenstellung, in welcher die Drosselklappen parallel zur Strömungsrichtung in den betreffenden Kanälen 16, 6 stehen, und einer Schließstellung, in welcher die Drosselklappen quer zu der Strömungsrichtung in den genannten Kanälen 16, 6 stehen, mittels einer Steuereinheit 7 individuell verstellbar. Diese Steuereinheit 7 ist der Einfachheit halber nur in Fig. 5 dargestellt.

Die Steuereinheit 7 wirkt über Signalleitungen auf nicht gezeigte Antriebe, welche die Drosselklappen 42a, 42b individuell in jede beliebige Zwischenstellung einstellen können.

Die Fig. 5 zeigt eine Betriebssituation, bei welcher die Drosselklappe 42a in Schließstellung und die Drosselklappe 42b in vollständiger Offenstellung ist. In diesem Fall wird nicht rückgewonnenes Restpulver über den dritten Kanal 6 zur Nachfilterung in die Filtereinheit 4 geleitet und von dort einer Entsorgung zugeführt.

Fig. 6 zeigt eine Betriebssituation, bei welcher die Drosselklappe 42a vollständig geöffnet und die Drosselklappe 42b geschlossen ist. In diesem Fall wird sämtliches abgesaugtes Überschußpulver über den Kanal 16 unter Umgehung der Rückgewinnungseinheit 5 direkt zur Filtereinheit 4 geführt, wo das Überschußpulver gefiltert und dann einer Entsorgung zugeführt wird.

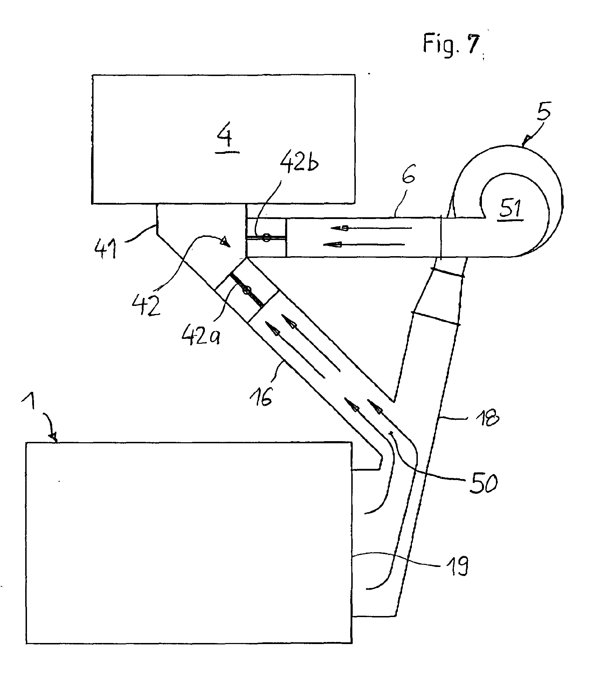

Fig. 7 zeigt eine dritte Betriebssituation, bei der beide Drosselklappen 42a und 42b geöffnet sind. In dieser Betriebssituation wird zur Reinigung ein Luftstrom durch die Kabine 1, die Rückgewinnungseinheit 5 und die Kanäle 18, 6 und 16 direkt in die Filtereinheit 4 gesaugt. Hierbei ist in der Praxis eine optimale Stellung der Drosselklappen 42a, 42b individuell unterschiedlich und nicht immer identisch mit der vollen Offenstellung, wie sie in Fig. 7 gezeigt ist. Die Steuereinheit 7 ermöglicht hier je nach Anlagenkonfiguration optimale, individuelle Einstellungen beider Drosselklappen 42a, 42b, die von Anlage zu Anlage unterschiedlich sein können und im Werk oder beim erstmaligen Gebrauch des Anwenders in einem Testlauf gefunden und fest programmiert werden können.

Die Drosselklappen 42a und 42b sind nicht an der Verzweigung 50, bei welcher sich eine nahezu unvermeidbare Verschmutzung auf die Beschichtungsqualität auswirkt, sondern nächst den Ausgängen der Kanäle 6, 16 angeordnet, d. h. an Stellen, bei denen eine mögliche Verschmutzung die Beschichtungsqualität nicht beeinflusst. Eine aufwendige Reinigung an diesen Stellen ist nicht nötig, weil die Drosseln an Orten angeordnet sind, an denen eine Verschmutzung die Beschichtungsqualität nicht beeinträchtigt. Die Verzweigung 50, ohne Drosselklappen darin, kann leicht und schnell gereinigt werden.

Die Kabine 1 kann in den gleichen Varianten wie anhand der Fig. 1 bis 4 beschrieben ausgeführt sein.

In der Beschreibung ist deutlich geworden, daß eine klare Trennung der Förderung von Überschusspulver einerseits über den Kanal 16 direkt zur Filtereinheit 4 und andererseits über die Kanäle 18 und 6 mit dem Umweg über die Rückgewinnungseinheit 5 erzielt ist. Durch diese Trennung ist die Möglichkeit geschaffen, schnell und mit kleinem und sehr kurzzeitigem Reinigungsaufwand zwischen den beiden Betriebsweisen umzuschalten, wobei eine die Beschichtungsqualität gefährdende Verschmutzung weitestgehend vermieden ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Pulverbeschichtungsanlage mit einer Kabine (1), in der Werkstücke (3) mit Pulver beschichtet werden und die mindestens eine Absaugöffnung (19) aufweist, durch welche ein Förderstrom enthaltend Luft und Überschußpulver von der Kabine (1) zu einer Rückgewinnungseinheit (5) oder zu einer Filtereinheit (4) förderbar ist, dadurch **gekennzeichnet,** daß die Filtereinheit (4) über einen ersten Kanal (16) und die Rückgewinnungseinheit (5) über einen zweiten Kanal (18) mit der Absaugöffnung (19) verbunden sind, und daß eine Steuereinrichtung (7, 42) zum wahlweisen Steuern des Förderstromes von der Absaugöffnung (19) durch den ersten Kanal (16) zur Filtereinheit (4) oder durch den zweiten Kanal (18) zur Rückgewinnungseinheit (5) oder zum Steuern eines Luftstromes gleichzeitig durch den ersten und den zweiten Kanal (16,18) zu Reinigungszwecken ausgelegt ist.

2. Pulverbeschichtungsanlage nach Anspruch 1, dadurch **gekennzeichnet**, daß ein dritter Kanal (6) zwischen einem Einlaß (41) der Filtereinheit und einem Auslaß (51) der Rückgewinnungseinheit (5) vorgesehen ist, und daß die Steuereinrichtung (7, 42) den Förderstrom wahlweise über den ersten Kanal (16) oder über den zweiten (18) und den dritten Kanal (6) in die Filtereinheit (4) leitet.

3. Pulverbeschichtungsanlage nach Anspruch 2, dadurch **gekennzeichnet,** daß die Steuereinrichtung (7, 42) zwei Drosselorgane (42a; 42b) zum gezielten Verändern der Strömungsquerschnitte in den Kanälen aufweist, nämlich ein erstes Drosselorgan (42a) in dem ersten Kanal (16), der direkt zur Filtereinheit (4) führt, und ein zweites Drosselorgan (42b) in dem dritten Kanal(6), der von der Rückgewinnungseinheit (5) zur Filtereinheit führt.

4. Pulverbeschichtungsanlage nach Anspruch 3, dadurch **gekennzeichnet,** daß in Schließstellung des einen Drosselorgans (42a, 42b) das andere Drosselorgan (42b, 42a) in Öffnungsstellung ist.

5. Pulverbeschichtungsanlage nach Anspruch 3, dadurch **gekennzeichnet,** daß zur Reinigung beide Drosselorgane (42a, 42b) automatisch oder manuell in individuell vorgebbare Öffnungsstellungen bringbar sind.

6. Pulverbeschichtungsanlage nach einem der Ansprüche 1 bis 5, dadurch **gekennzeichnet,** daß nur eine Absaugöffnung (19) an einem Ende der Kabine (1) vorgesehen ist und daß im Anschluß an die Absaugöffnung (19) eine Verzweigung (50) in den ersten Kanal (16) und den zweiten Kanal (18) vorgesehen ist.

7. Pulverbeschichtungsanlage nach einem der Ansprüche 1 bis 6, dadurch **gekennzeichnet,** daß in der Kabine (1) ein Austrageband (15) zum Abfördern von Überschußpulver zur Austragsöffnung (17;19) vorgesehen ist.

8. Pulverbeschichtungsanlage nach einem der Ansprüche 1 oder 2, dadurch **gekennzeichnet,** daß in der Kabine ein Austrageband (15) zum Abfördern von Überschußpulver und zwei Absaugöffnungen (17; 19) mit Abstand in Werkstückförderrichtung (F) der in die Kabine (1) förderbaren Werkstücke (3) vorgesehen sind, wobei mit der einen Absaugöffnung (17) der erste Kanal (16) und mit der anderen Absaugöffnung (19) der zweite Kanal (18) kommunizieren und die Pulverförderung durch die Absaugöffnungen (17, 19) alternativ mittels der Steuereinrichtung (7, 42) absperrbar ist, und daß das Austrageband (15) jeweils in derjenigen Richtung (P) antreibbar ist, die zu der nicht abgesperrten Absaugöffnung führt.

9. Pulverbeschichtungsanlage nach Anspruch 8, dadurch **gekennzeichnet,** daß die Steuereinrichtung ein Absperrorgan (42) aufweist, welches in eine den ersten Kanal (16) sperrende und den zweiten Kanal (18) freigebende Position oder umgekehrt umschaltbar ist.

10. Pulverbeschichtungsanlage nach Anspruch 9, dadurch **gekennzeichnet,** daß ein Umschalten des Absperrorgans (42) zwangsläufig eine Reversierung der Laufrichtung (P) des Austragsbandes (15) zur Folge hat.

11. Pulverbeschichtungsanlage nach Anspruch 9, dadurch **gekennzeichnet,** daß eine Reversierung der Laufrichtung (P) des Austragebandes (15) zwangsläufig ein Umschalten des Absperrorgans (42) zur Folge hat.

12. Pulverbeschichtungsanlage nach einem der Ansprüche 9 bis 11, dadurch **gekennzeichnet,** daß die beiden Absaugöffnungen (17; 19) an den Stirnseiten (13, 14) der Kabine (1) vorgesehen sind.

13. Pulverbeschichtungsanlage nach einem der Ansprüche 9 bis 12, dadurch **gekennzeichnet,** daß das Absperrorgan (42) ein Schieber ist, der zwischen zwei Absperrstellungen gradlinig hin- und herbewegbar ist, in deren einer der Schieber den ersten Kanal (16) und in deren anderer der Schieber den dritten Kanal (6) zur Filtereinheit (4) hin absperrt.

14. Pulverbeschichtungsanlage nach einem der Ansprüche 9 bis 13, dadurch **gekennzeichnet,** daß das Absperrorgan (42) in eine Stellung bringbar ist, in der beide Kanäle (16; 18, 6) mindestens teilweise mit der Filtereinheit (4) kommunizieren.
